(19) Europäisches Patentamt
European Patent Office
Office européen des brevets

(11) Publication number: 0 178 017 B1

# (12) EUROPEAN PATENT SPECIFICATION

(45) Date of publication of the patent specification: 19.12.90

(51) Int. Cl.⁵: A01D 41/12

(21) Application number: 85201581.7

(22) Date of filing: 01.10.85

## (54) Lateral leveling mechanism for combine cleaning apparatus.

(30) Priority: 11.10.84 US 659932

(43) Date of publication of application: 16.04.86 Bulletin 86/16

(45) Publication of the grant of the patent: 19.12.90 Bulletin 90/51

(84) Designated Contracting States: DE FR GB

(56) References cited:
AT-B-294 476
DE-A-3 200 327
US-A-2 691 444
US-A-3 186 548
US-A-4 344 443

(73) Proprietor: FORD NEW HOLLAND, INC. (a Delaware corp.), 500 Diller Avenue, New Holland Pennsylvania 17557(US)

(72) Inventor: Rowland-Hill, E. William, 1707 Marietta Avenue, Lancaster, PA 17601(US)
Inventor: Sheehan, Ronald T., 2166 Coventry Road, Lancaster, PA 17601(US)

(74) Representative: Vandenbroucke, Alberic T.J., FORD NEW HOLLAND N.V. Leon Claeysstraat 3A, B-8210 Zedelgem(BE)

EP 0 178 017 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to combine harvesters and, more particularly, to improvements in the cleaning apparatus of such harvesters to permit a leveling thereof under sidehill conditions.

The operation of a combine harvester under sidehill conditions is less efficient than the operation of a combine operating on generally level ground because of the gravity induced movement of threshed grain to the downhill side of the cleaning apparatus. This unbalanced loading of the cleaning mechanism prevents a proper flow of air from a cleaning fan through the threshed grain on the cleaning sieves to facilitate the removal of chaff and other debris.

This unbalanced lateral distribution of material across the cleaning mechanism reduces or eliminates the aerodynamic separation and cleaning of the threshed grain by the flow of air through the sieves at least in sections of the cleaning sieves. As a result, the cleaning mechanism delivers a greater amount of uncleaned grain to the returns system for reprocessing and also discharges uncleaned grain at the rear of the combine which thus is lost from the harvesting process. One known method of eliminating this problem is to reduce crop intake; however, operating efficiency of the combine is correspondingly reduced which is not desirable.

One attempt to maintain a combine cleaning apparatus in a horizontal orientation while the combine is operating under sidehill conditions is found in US-A-3.731.470. With this particular apparatus, the entire frame of the combine is leveled through the operation of hydraulic cylinders, requiring a modified connection of the crop harvesting header to the combine to permit a proper gathering of the crop material to be harvested.

Other leveling mechanisms are shown in US-A-2.691.444 and US-A-3.186.548 which disclose means to maintain the chaffer sieve in a transverse level attitude during operation of the combine harvester under sidehill conditions. However, gravity induced movement of threshed grain to the downhill side of the cleaning apparatus on conventional combine harvesters operating under sidehill conditions not only occurs on the chaffer sieve but equally occurs on the grain pan disposed in the threshed grain receiving relationship with the threshing and separating mechanism forwardly of the chaffer sieve.

Still another cleaning apparatus leveling mechanism can be seen in US-A-4.344.443, which provides that the entire cleaning mechanism, including the fan, is pivotally mounted for movement relative to the main frame about a longitudinally extending pivotal axis. However, this particular mechanism is expensive to manufacture, is cumbersome in operation, results in an unnecessary shifting of major structural components and requires a more complex main frame structure and drive train components.

It is the object of the present invention to overcome the aforementioned disadvantages of the prior art and, more particularly, to provide a lateral leveling mechanism for the cleaning apparatus in a combine harvester which, at the same time, is efficient in operation on the one hand and yet is simple in design with only a minimal number of parts differing from the corresponding parts in a conventional combine and therefore relatively inexpensive to manufacture, on the other hand.

According to the invention, a combine harvester is provided having a mobile main frame supporting a cleaning mechanism in flow communication with a threshing and separating mechanism for receiving threshed grain therefrom; said cleaning mechanism being operable to clean debris from said threshed grain and comprising :

- shaker shoe means operably supported on the main frame for reciprocation in a generally fore-and-aft direction on the one hand and operably supporting a subframe for pivotal movement relative to said shaker shoe means about a generally fore-and-aft extending axis on the other hand; said subframe, in turn, supporting sieve means;
- fan means operable to blow air through the sieve means to facilitate the removal of debris from the threshed grain;
- drive means operable to effect said generally fore-and-aft reciprocating movement of the shaker shoe means with said subframe and said sieve means thereon to convey threshed grain along said sieve means while permitting the passage of cleaned grain therethrough; and
- position control means operably associated with the subframe for selectively controlling pivotal movement thereof to enable maintaining said sieve means in a generally transversely level attitude irrespective of the transverse attitude of the main frame and without effecting movement of the fan means relative to said main frame.

The invention further is characterized in that :

- the cleaning mechanism further also comprises grain pan means operably supported on said subframe; said grain pan means, on the one hand, forming together with said subframe and said sieve means a structure which is pivotable as a unit around said axis and, on the other hand, being disposed to receive threshed grain and, by virtue of the oscillatory movement of the shaker shoe means supporting said grain pan means, also to convey said grain along the grain pan means toward the sieve means;
- the position control means comprise, on the one hand, actuator means operatively interconnecting the shaker shoe means and the subframe and, on the other hand, an inclinometer mounted on the main frame for sensing the transverse inclination thereof and controlling the operation of the actuator means in response to the transverse inclination of the main frame to maintain the subframe with the grain pan means and the sieve means thereon in said generally transversely level attitude; and
- said inclinometer comprises first and second cooperable members and a link; said first member being movable in response to gravity forces, upon the main frame assuming a laterally inclined position, to thereby cause said second member to operate the actuator means for pivoting the subframe toward said generally transversely level attitude and said link interconnecting the subframe and the second member for, upon the subframe pivoting toward said generally transversely level attitude, causing this second member to move in the same direction as the first member to thereby cause said second member to interrupt operation of the actuator means as the subframe reaches said attitude.

The pivotal movement of the subframe relative to the shaker shoe is accomplished through the use of a hydraulic cylinder interconnecting the shaker shoe and the subframe to permit a lateral leveling of the grain pan and chaffer sieve when the combine is operated under sidehill conditions. Said inclinometer is utilized to automatically control the flow of hydraulic fluid to the hydraulic cylinder to permit the subframe to be leveled in response to a sensing of a non-horizontal transverse inclination by the inclinometer.

Accordingly, the instant invention provides a mechanism for leveling the cleaning apparatus in a combine harvester that only levels the grain pan and the chaffer sieve. The fan and supporting structural components are not pivotally supported for lateral tilting movement. A lower sieve can be suspended from the main frame below the chaffer sieve without the pivotal movement of the subframe supporting the chaffer sieve effecting the movement of said lower sieve. This lower sieve can be operatively connected to the shaker shoe to effect a fore-and-aft reciprocating movement in opposition to the shaker shoe and yet to avoid any interference with the transverse leveling action of the grain pan and the chaffer sieve.

It is an advantage of this invention that the efficiency of operation of the combine cleaning mechanism is increased under sidehill operating conditions. Also the grain losses and return flows are diminished. Yet the invention also provides a leveling mechanism for a combine cleaning apparatus without requiring complex main frame structure and drive train components. Furthermore, the weight of the structural elements pivotally supported for movement about a longitudinally extending axis is reduced, permitting an improved leveling operation.

In general, the instant invention provides a lateral leveling mechanism for the cleaning apparatus of a combine harvester which is durable in construction, inexpensive of manufacture, carefree of maintenance, facile in assemblage, and simple and effective in use.

The advantages of this invention will become apparent upon consideration of the following detailed description of the invention, especially when taken in conjunction with the accompanying drawings wherein:

Fig. 1 is a side elevational view of a combine harvester incorporating the principles of the instant invention, portions of the side structure of the harvester being broken away to better show the invention;

Fig. 2 is an enlarged partial cross sectional view of the cleaning apparatus seen in Fig. 1, the generally fore-and-aft reciprocating movement of the shaker shoe and lower sieve being shown in phantom;

Fig. 3 is a partial cross sectional end view of the cleaning apparatus shown in Fig. 2 seen in the direction indicated by lines 3-3, the pivotal movement of the subframe containing the grain pan and chaffer sieve being shown in phantom, the hydraulic and electrical diagrams for controlling the operation of the hydraulic cylinder tilting the subframe being schematically shown beneath the cleaning apparatus; and

Figs 4-6 are schematic views depicting the operation of the lateral leveling mechanism for the combine cleaning apparatus.

Referring now to the drawings and, particularly, to Fig. 1, a side elevational view of a combine harvester incorporating the principles of the instant invention, can be seen. Any left and right references are used as a matter of convenience and are determined with reference to the direction of operative forward travel. The combine 10 is provided with a main frame 12 having at least one transversely disposed beam 13 mobilely supported over the ground G by wheels 14. A crop harvesting header 15 is forwardly supported from the frame 12 to gather crop material and convey it rearwardly via a feeding mechanism 17 to a threshing and separating mechanism 19. The threshing and separating mechanism 19 is operable to thresh the crop material fed thereto and separate the threshed grain from the trash material by precipitating the threshed grain downwardly through the threshing and separating mechanism 19 while discharging the trash material along a separate path to be deposited on the ground G rearwardly of the combine 10.

A cleaning mechanism 20 is positioned beneath the threshing and separating mechanism 19 to receive the threshed grain precipitated therefrom on a grain pan 22. Generally, the cleaning mechanism 20 is operatively connected to an eccentric drive 24 to affect a generally fore-and-aft reciprocating movement of the cleaning mechanism 20 to convey the threshed grain in a rearward direction. Sieve means 25 are positioned rearwardly of the grain pan 22 to receive threshed grain conveyed rearwardly therefrom and clean the threshed grain from chaff and other debris conveyed therewith. Typically, the sieve means 25 include an upper chaffer sieve 26 and a lower cleaning sieve 28 mounted for opposing fore-and-aft reciprocating movement and in flow communication with air being blown from a fan 29 upwardly therethrough to remove chaff and debris from the threshed grain. Cleaned grain passing through the sieve means 25 is conveyed into a storage tank 18 supported on the main frame 12.

Referring now to Figs. 2 and 3, the details of the leveling mechanism comprising the instant invention can best be seen. The grain pan 22 and chaffer sieve 26 are mounted in a subframe 31 which in turn is pivotally supported by fore-and-aft extending and longitudinally spaced pivots 33, 34 within a shaker shoe 35. A tailings return section 27 is positioned at the rear of the chaffer sieve 26 and is pivotally movable therewith. The tailings return section 27 is cooperable with conventional apparatus for returning unthreshed heads to the threshing and separating means 19. The shaker shoe 35 is pivotally supported from the frame 12 by connecting links 36, 37 incorporating rubber bushings in a conventional manner to permit a generally fore-and-aft reciprocating movement induced by drive arms 38 interconnecting the shaker shoe 35 and the eccentric drive 24. The lower cleaning sieve 28 is supported from the frame 12 by connecting links 37, 39 in a similar manner to permit a generally fore-and-aft reciprocating movement. By utilizing the connecting links 37 with frame mounting points intermediate the connection between the shaker shoe 35 and the lower cleaner sieve 28, the shaker shoe 35 and lower sieve 28 are drivingly reciprocating in opposing fore-and-aft directions in a manner conventionally known by one skilled in the art.

The shaker shoe 35 is provided with inwardly directed arcuate side members 41 to permit a sealing cooperation with longitudinally extending seals 43 connected to the subframe 31 and sweepingly engaging the inside of said arcuate side members 41. Although the shaker shoe 35 is not laterally pivotable relative to the main frame 12, the shaker shoe 35 does reciprocate in the aforementioned fore-and-aft direction relative to said main frame 12. Seals 44 connected to the shaker shoe 35 engage the side sheets 46 of the combine 10 to prevent the loss of threshed grain between the shaker shoe 35 and side sheets 46.

The subframe 31 is provided with a downwardly extending actuating arm 48. A hydraulic cylinder 50 interconnects a mounting tab 52 connected to the shaker shoe 35 and the actuating arm 48 for the pivotal movement of the subframe 31 about the fore-and-aft extending pivot axis 55 defined by the front and back pivots 33, 34. An adjustable stop bolt 49 engageable with the shaker shoe 35 serves as a limit to the amount of pivotal movement permitted to the subframe 31 in one direction, while that the end of the retraction stroke of the cylinder 50 limits the movement of the subframe 31 in the opposing direction. The hydraulic cylinder 50 is operatively associated with a hydraulic system 60 providing a flow of hydraulic fluid under pressure for operation thereof. The hydraulic system 60 includes a solenoid valve 62 controlling the direction of hydraulic fluid flow to the cylinder 50. The solenoid valve 62 can be positioned to direct fluid to the cylinder 50 for either extension or retraction thereof or to circulate fluid back to the reservoir 63 without affecting any movement of the hydraulic cylinder 50.

The positioning of the solenoid valve 62 is controlled through an electrical circuit 65 connected to an inclinometer 70. The inclinometer 70 includes a master member 72 having first and second spaced apart electrical contacts 73, 74, respectively, and a pendulum 75 pivotally mounted within the master member 72 for movement with the force of gravity relative to the master member 72. The pendulum 75 carries a third electrical contact 76 engageable with respectively the first and second contacts 73, 74 to close the electrical circuit 65 and send a flow of electrical current from a primary source, such as a battery 68, to the solenoid valve 62. The position of the master member 72 relative to the transverse beam 13 is controlled through a link 79 interconnecting the actuating arm 48 and the master member 72. A lateral tilting of the subframe 31 relative to the shaker shoe 35 affects a corresponding movement of the master member 72 relative to the transverse beam 13 and the pendulum 75. One skilled in the art will readily realize that other means for sensing the transverse inclination of the main frame 12 in place of the inclinometer 70 described above could be provided to equally control the operation of the solenoid valve 62, such as the utilization of mercury switches or hall effect switches. Another modification to the inclinometer 70, described above, would be to dampen the movement of the pendulum 75 in an oil bath.

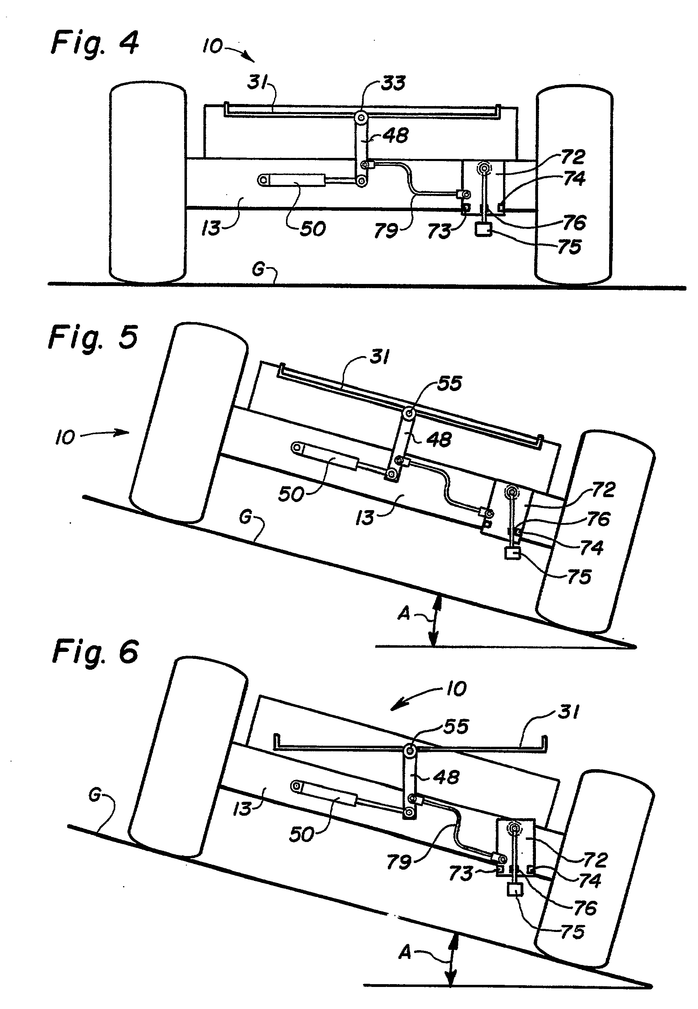

Referring to the schematic view seen in Figs. 4-6, and the structural components best referenced in Fig. 3, the operation of the lateral leveling mechanism can best be seen. In Fig. 4, the combine 10 is shown operating on level ground G with the subframe 31 of the cleaning mechanism 20 in a horizontal orientation and the pendulum 75 positioned with the third contact 76 spaced intermediate of the first and second contacts 73, 74. A shifting of the transverse orientation of the combine 10 onto a sidehill operation depicted by an inclination of the ground G in Fig. 5 at an angle A relative to horizontal with the left wheel being lower than the right wheel, causes a relative movement between the pendulum 75 and the master member 72. Since the movement of the pendulum 75 is influenced by the force of gravity, the movement of the master member 72 with the transverse beam 13 causes the second and third contacts 74, 76 to engage.

The subsequent flow of electrical current from the battery 68 through the electrical circuit 65 causes a shifting of the solenoid valve 62 to direct hydraulic fluid through the hydraulic cylinder 50 to affect an extension of the cylinder 50, the result being a pivotal movement of the subframe 31 about the pivot axis 55. The corresponding movement of the actuating arm 48 pushes the master member 72 until the second and third contacts 74, 76 break engagement and, therefore, break the electrical circuit 65, permitting the solenoid valve 62 to shift back into a neutral position causing a circulating of hydraulic fluid without affecting further movement of the hydraulic cylinder 50. As represented in Fig. 6, the result is that the cleaning mechanism 20 is positioned in a horizontal orientation while that the transverse beam 13 is inclined at angle A in a sidehill operation.

A return of the combine 10 to level ground G or the positioning of the combine 10 in a transverse inclination with the right wheel being lower than the left wheel, is similar to the operation described relative to Figs. 4-6 above. The relative movement between the pendulum 75 and the master member 72 effects an engagement between the first and third contacts 73, 76 causing a shifting of the solenoid valve 62 to affect a flow of hydraulic fluid to the hydraulic cylinder 50 to cause a retraction thereof and pivot the subframe 31 about the pivot axis 55 until the master member 72 is moved sufficiently relative to the pendulum 75 to break the engagement between the first contact 73 and the third contact 76.

While that the preferred structure in which the principles of the present invention have been incorporated, are shown and described above, it is to be understood that the invention is not to be limited to the particular details thus presented, but, in fact, widely different means may be employed in the practice of the broader aspects of this invention. The scope of the appended claims is intended to encompass obvious changes in the details, materials and the arrangement of parts which will occur to one of skill in the art upon a reading of this disclosure.

Aspects of the combine harvester with the self-leveling cleaning mechanism described herein are claimed in the co-pending patent application no 85.201.582.5/0.178.018.

## Claims

1. A combine harvester (10) having a mobile main frame (12) supporting a cleaning mechanism (20) in flow communication with a threshing and separating mechanism (19) for receiving threshed grain therefrom; said cleaning mechanism (20) being operable to clean debris from said threshed grain and comprising :

- shaker shoe means (35) operably supported on the main frame (12) for reciprocation in a generally fore-and-aft direction on the one hand and operably supporting a subframe (31) for pivotal movement relative to said shaker shoe means (35) about a generally fore-and-aft extending axis (55) on the other hand; said subframe (31), in turn, supporting sieve means (26);
- fan means (29) operable to blow air through the sieve means (26) to facilitate the removal of debris from the threshed grain;
- drive means (24, 38) operable to effect said generally fore-and-aft reciprocating movement of the shaker shoe means (35) with said subframe (31) and said sieve means (26) thereon to convey threshed grain along said sieve means (26) while permitting the passage of cleaned grain therethrough; and
- position control means (48, 50, 60, 70) operably associated with the subframe (31) for selectively controlling pivotal movement thereof to enable maintaining said sieve means (26) in a generally transversely level attitude irrespective of the transverse attitude of the main frame (12) and without effecting movement of the fan means (29) relative to said main frame (12);

characterized in that :

- the cleaning mechanism (20) further also comprises grain pan means (22) operably supported on said subframe (31); said grain pan means (22), on the one hand, forming together with said subframe (31) and said sieve means (26) a structure which is pivotable as a unit around said axis (55) and, on the other hand, being disposed to receive threshed grain and, by virtue of the oscillatory movement of the shaker shoe means (35) supporting said grain pan means (22), also to convey said grain along the grain pan means (22) toward the sieve means (26);
- the position control means (48, 50, 60, 70) comprise, on the one hand, actuator means (48, 50, 60) operatively interconnecting the shaker shoe means (35) and the subframe (31) and, on the other hand, an inclinometer (70) mounted on the main frame (12) for sensing the transverse inclination thereof and controlling the operation of the actuator means (48, 50, 60) in response to the transverse inclination of the main frame (12) to maintain the subframe (31) with the grain pan means (22) and the sieve means (26) thereon in said generally transversely level attitude; and
- said inclinometer (70) comprises first and second cooperable members (75, 76 resp. 72, 73, 74) and a link (79); said first member (75, 76) being movable in response to gravity forces, upon the main frame (12) assuming a laterally inclined position, to thereby cause said second member (72, 73, 74) to operate the actuator means (48, 50, 60) for pivoting the subframe (31) toward said generally transversely level attitude and said link (79) interconnecting the subframe (31) and the second member (72, 73, 74) for, upon the subframe (31) pivoting toward said generally transversely level attitude, causing this second member (72, 73, 74) to move in the same direction as the first member (75, 76) to thereby cause said second member (72, 73, 74) to interrupt operation of the actuator means (48, 50, 60) as the subframe (31) reaches said attitude.

2. A combine harvester according to claim 1, characterized in that the first and second cooperable members are formed by first and second contact members (75, 76 resp. 72, 73, 74) which are operable to make contact with each other to thereby energize the actuator means (48, 50, 60).

3. A combine harvester (10) according to claim 2, characterized in that the actuator means (48, 50, 60) comprise :

- a hydraulic cylinder (50) interconnecting the shaker shoe means (35) and the subframe (31), and
- an electro-hydraulic system (60) having a solenoid valve (62) and operably interconnecting the inclinometer (70) and the hydraulic cylinder (50); the arrangement being such that a flow of electrical current between said first and second contact members (75, 76 resp. 72, 73, 74), when engaged, effects the actuation of said solenoid valve (62) to control a flow of hydraulic fluid to and from said hydraulic cylinder (50) to effect leveling of said subframe (31).

4. A combine harvester (10) according to claim 2 or 3, characterized in that the second contact member (72, 73, 74) has first and second contacts (73, resp. 74); the respective engagement between the first contact member (75, 76) and said first and second contacts (73, resp. 74) of the second contact member (72, 73, 74) effecting movement of the subframe (31) in opposing directions.

5. A combine harvester (10) according to any of the preceding claims characterized in that :

- the shaker shoe means (35) have arcuate sidewalls (41) to correspond to the pivotal movement of the subframe (31); and

- the subframe (31) includes fore-and-aft extending seals (43) engageable with the arcuate sidewalls (41) of the shaker shoe means (35) to prevent the loss of threshed grain therebetween.

6. A combine harvester (10) according to any of the preceding claims, characterized in that the shaker shoe means (35) are provided with longitudinally extending seals (44) engageable with sidewalls (46) of the main frame (12) to prevent the loss of threshed grain between the shaker shoe means (35) and said main frame sidewalls (46) during the reciprocating movement of the shaker shoe means (35).

7. A combine harvester (10) according to any of the preceding claims, characterized in that further sieve means (28) are suspended from the main frame (12) below the first sieve means (26) on the subframe (31) to receive cleaned grain therefrom and subject said cleaned grain to a further cleaning action; the drive means (24, 38) being operably connected to said second sieve means (28) for a generally fore-and-aft reciprocating movement in opposition to said shaker shoe means (35) and the arrangement being such that pivotal movement of the subframe (31) about said fore-and-aft extending axis (55) relative to the main frame (12) remains without effect on the movement of the second cleaning means (28).

**Patentansprüche**

1. Mähdrescher (10) mit einem fahrbaren Hauptrahmen (12), der einen Reinigungsmechanismus (20) in Strömungsverbindung mit einem Dresch- und Trennmechanismus (19) trägt, um gedroschenes Korn von diesem zu empfangen, wobei der Reinigungsmechanismus (20) betreibbar ist, um Spreu von dem gedroschenen Korn zu entfernen und folgende Teile umfaßt:

- Schüttelsiebeinrichtungen (35), die einerseits betriebsmäßig auf dem Hauptrahmen (12) für eine Hin- und Herbewegung in einer allgemein längs verlaufenden Richtung gehaltert sind und die andererseits betriebsmäßig einen Hilfsrahmen (31) für eine Schwenkbewegung gegenüber den Schüttelsiebeinrichtungen (35) um eine sich allgemein in Längsrichtung erstreckende Achse (55) haltern, wobei der Hilfsrahmen (31) seinerseits Siebeinrichtungen (26) haltert,
- Gebläseeinrichtungen (29), die zum Blasen von Luft durch die Siebeinrichtungen (26) betreibbar sind, um die Entfernung von Spreu von dem gedroschenen Korn zu erleichtern,
- Antriebseinrichtungen (24, 38), die zur Ausführung der allgemein in Längsrichtung verlaufenden Hin- und Herbewegung der Schüttelsiebeinrichtungen (35) mit dem daran angeordneten Hilfsrahmen (31) und den darauf angeordneten Siebeinrichtungen (26) betreibbar sind, um gedroschenes Korn entlang der Siebeinrichtungen (26) zu fördern, während der Durchgang von gereinigtem Korn durch diese hindurch ermöglicht wird, und
- Positionssteuereinrichtungen (48, 50, 60, 70), die betriebsmäßig dem Hilfsrahmen (31) zugeordnet sind, um selektiv dessen Schwenkbewegung zu steuern, damit die Siebeinrichtungen (26) in einer allgemein in Querrichtung ebenen Lage unabhängig von der Querlage des Hauptrahmens (12) gehalten werden können, ohne daß eine Bewegung der Gebläseeinrichtungen (29) gegenüber dem Hauptrahmen (12) hervorgerufen wird, dadurch gekennzeichnet, daß
- der Reinigungsmechanismus (20) weiterhin Kornpfanneneinrichtungen (22) umfaßt, die betriebsmäßig auf dem Hilfsrahmen (31) gehaltert sind und die einerseits zusammen mit dem Hilfsrahmen (31) und den Siebeinrichtungen (26) eine Struktur bilden, die als Einheit um die Achse (55) schwenkbar ist, und die andererseits zum Empfang gedroschenen Korns angeordnet sind und außerdem aufgrund der Schwingungsbewegung der die Kornpfanneneinrichtungen (22) tragenden Schüttelsiebeinrichtungen (35) das Korn entlang der Kornpfanneneinrichtungen (22) in Richtung auf die Siebeinrichtungen (26) befördern,
- die Positionssteuereinrichtungen (48, 50, 60, 70) einerseits Stellgliedeinrichtungen (48, 50, 60), die die Schüttelsiebeinrichtungen (35) und den Hilfsrahmen (31) betriebsmäßig verbinden, und andererseits einen Neigungsmesser (70) umfassen, der auf dem Hauptrahmen (12) zur Messung von dessen Querneigung befestigt ist und die Betriebsweise der Stellgliedeinrichtungen (48, 50, 60) in Abhängigkeit von der Querneigung des Hauptrahmens (12) steuert, um den Hilfsrahmen (31) mit den Kornpfanneneinrichtungen (22) und den daran angeordneten Siebeinrichtungen (26) in der allgemein in Querrichtung ebenen Lage zu halten, und
- der Neigungsmesser (70) erste und zweite zusammenwirkende Teile (75, 76 bzw. 72, 73, 74) und ein Gestänge (79) umfaßt, wobei der erste Teil (75, 76) in Abhängigkeit von Schwerkräften beweglich ist, wenn der Hauptrahmen (12) eine in Querrichtung geneigte Position einnimmt, um dadurch eine Betätigung der Stellgliedeinrichtungen (48, 50, 60) durch das zweite Teil (72, 73, 74) hervorzurufen, um den Hilfsrahmen (31) in die allgemein in Querrichtung ebene Lage zu verschwenken, wobei das Gestänge (79) den Hilfsrahmen (31) und den zweiten Teil (72, 73, 74) derart miteinander verbindet, daß bei einer Verschwenkung des Hilfsrahmens (31) in die allgemein in Querrichtung ebenen Lage eine Bewegung dieses zweiten Teils (72, 73, 74) in der gleichen Richtung wie der erste Teil (75, 76) hervorgerufen wird, um auf diese Weise zu bewirken, daß der zweite Teil (72, 73, 74) die Betriebsweise der Stellgliedeinrichtungen (48, 50, 60) unterbricht, wenn der Hilfsrahmen (31) diese Lage erreicht.

2. Mähdrescher nach Anspruch 1, dadurch gekennzeichnet, daß die ersten und zweiten zusammenwirkenden Teile durch erste und zweite Kontaktteile (75, 76 bzw. 72, 73, 74) gebildet sind, die so betätigbar sind, daß sie einen Kontakt miteinander ergeben, um die Stellgliedeinrichtungen (48, 50, 60) anzusteuern.

3. Mähdrescher (10) nach Anspruch 2, dadurch gekennzeichnet, daß die Stellgliedeinrichtungen (48, 50, 60) folgende Teile umfassen:
- einen Hydraulikzylinder (50), der die Schüttelsiebeinrichtungen (35) und den Hilfsrahmen (31) verbindet, und
- ein elektro-hydraulisches System (60), das ein Magnetspulenventil (62) aufweist und betriebsmäßig den Neigungsmesser (70) und den Hydraulikzylinder (50) verbindet, wobei die Anordnung derart ist, daß ein elektrischer Stromfluß zwischen den ersten und zweiten Kontaktteilen (75, 76 bzw. 72, 73, 74) bei deren Eingriff die Betätigung des Magnetspulenventils (62) bewirkt, um die Strömung von Hydraulikflüssigkeit an den Hydraulikzylinder (50) und von diesem fort zu steuern, damit eine Ausrichtung des Hilfsrahmens (31) auf die ebene Lage bewirkt wird.

4. Mähdrescher (10) nach Anspruch 2 oder 3, dadurch gekennzeichnet, daß der zweite Kontaktteil (72, 73, 74) erste und zweite Kontakte (73 bzw. 74) aufweist und daß der jeweilige Eingriff zwischen dem ersten Kontaktteil (75, 76) und den ersten und zweiten Kontakten (73 bzw. 74) des zweiten Kontaktteils (72, 73, 74) eine Bewegung des Hilfsrahmens (31) in entgegengesetzten Richtungen bewirkt.

5. Mähdrescher (10) nach einem der vorhergehenden Ansprüche, dadurch gekennzeichnet, daß
- die Schüttelsiebeinrichtungen (35) gebogene Seitenwände (41) aufweisen, die der Schwenkbewegung des Hilfsrahmens (31) entsprechen, und
- der Hilfsrahmen (31) sich in Längsrichtung erstreckende Dichtungen (43) einschließt, die mit den bogenförmigen Seitenwänden (41) der Schüttelsiebeinrichtungen (35) in Eingriff bringbar sind, um zwischen diesen den Verlust von gedroschenem Korn zu verhindern.

6. Mähdrescher (10) nach einem der vorhergehenden Ansprüche, dadurch gekennzeichnet, daß die Schüttelsiebeinrichtungen (35) mit sich in Längsrichtung erstreckenden Dichtungen (44) versehen sind, die mit Seitenwänden (46) des Hauptrahmens (12) in Eingriff bringbar sind, um einen Verlust von gedroschenem Korn zwischen den Schüttelsiebeinrichtungen (35) und den Hauptrahmen-Seitenwänden (46) während der Hin- und Herbewegung der Schüttelsiebeinrichtungen (35) zu verhindern.

7. Mähdrescher (10) nach einem der vorhergehenden Ansprüche, dadurch gekenzeichnet, daß weitere Siebeinrichtungen (28) an dem Hauptrahmen (12) unterhalb der ersten Siebeinrichtungen (26) an dem Hilfsrahmen (31) aufgehängt sind, um gereinigtes Korn von diesen zu empfangen und um das gereinigte Korn einer weiteren Reinigungswirkung zu unterwerfen, daß die Antriebseinrichtungen (24, 38) betriebsmäßig mit den zweiten Siebeinrichtungen (28) für eine allgemein in Längsrichtung verlaufende Hin- und Herbewegung entgegengesetzt zu den Schüttelsiebeinrichtungen (35) verbunden sind und daß die Anordnung derart ist, daß die Schwenkbewegung des Hilfsrahmens (31) um die sich in Längsrichtung erstreckende Achse (55) gegenüber dem Hauptrahmen (12) ohne Auswirkung auf die Bewegung der zweiten Reinigungseinrichtungen (28) bleibt.

**Revendications**

1. Moissonneuse-batteuse (10) équipée d'un châssis principal mobile (12) supportant un mécanisme de nettoyage (20) en communication de passage avec un mécanisme de battage et de séparation (19) pour recevoir du grain battu provenant de celui-ci; ledit mécanisme de nettoyage (20) étant apte à opérer pour éliminer dudit grain battu des débris, et comportant:
– des moyens formant crible (35) montés d'une manière fonctionnelle sur le châssis principal (12) en vue d'exécuter un mouvement de va-et-vient dans une direction sensiblement longitudinale, d'une part, et supportant d'une manière fonctionnelle un châssis auxiliaire (31) en vue d'un mouvement de pivotement par rapport à auxdits moyens formant crible (35) autour d'un axe (55) qui s'étend sensiblement longitudinalement, d'autre part; ledit châssis auxiliaire (31) supportant à son tour un moyen formant grille (26);
– des moyens formant ventilateur (29) aptes à opérer pour souffler de l'air à travers le moyen formant grille (26) afin de faciliter l'élimination des débris du grain battu;
– des moyens d'entraînement (24, 38) aptes à opérer ledit mouvement de va-et-vient sensiblement longitiudinal des moyens formant crible (35) qui portent sur eux ledit châssis auxiliaire (31) et ledit moyen formant grille (26), pour acheminer le grain battu le long dudit moyen formant grille (26) tout en laissant passer le grain nettoyé à travers celui-ci; et
– des moyens de commande de position (48, 50, 60, 70) associés d'une manière fonctionnelle au châssis auxiliaire (31) en vue de commander sélectivement le mouvement de pivotement de celui-ci, afin de permettre le maintien dudit moyen formant grille (26) dans une position de niveau sensiblement transversalement, indépendamment de la position transversale du châssis principal (12) et sans entraîner un déplacement des moyens formant ventilateur (29) par rapport audit châssis principal (12); caractérisée en ce que:
– le mécanisme de nettoyage (20) comporte également des moyens formant table à grain (22) montés d'une manière fonctionnelle sur ledit châssis auxiliaire (31), qui, d'une part, définissent conjointement avec ledit châssis auxiliaire (31) et ledit moyen formant grille (26) une structure apte à pivoter d'un seul bloc autour dudit axe (55) et qui, d'autre part, sont conçus pour recevoir le grain battu et aussi pour, grâce au mouvement oscillatoire des moyens formant crible (35) qui supportent lesdits moyens formant table à grain (22), acheminer ledit grain le long des moyens formant table à grain (22) en direction du moyen formant grille (26);
– les moyens de commande de position (48, 50, 60, 70) comportent, d'une part, des moyens d'actionnement (48, 50, 60) qui relient entre eux d'une manière fonctionnelle les moyens formant crible (35) et le châssis auxiliaire (31) et, d'autre part, un inclinomètre (70) monté sur le châssis principal (12) en vue de détecter l'inclinaison transversale de celui-ci et de commander le fonctionnement des moyens d'actionnement (48, 50, 60) en réponse à l'inclinaison transversale du châssis principal (12), afin de maintenir dans ladite position de niveau sensiblement transversalement, le châssis auxiliaire (31) qui porte sur lui les moyens formant table à grain (22) et le moyen formant grille (26); et

– ledit inclinomètre (70) comporte des premier et second organes aptes à coopérer (75, 76, resp. 72, 73, 74) et une pièce de liaison (79); ledit premier organe (75, 76) étant mobile en réponse à des forces de gravité, lorsque le châssis principal (12) adopte une position inclinée latéralement, pour ainsi obliger ledit second organe (72, 73, 74) à faire fonctionner les moyens d'actionnement (48, 50, 60) en vue de faire pivoter le châssis auxiliaire (31) en direction de ladite position de niveau sensiblement transversalement, tandis que ladite pièce de liaison (79) relie entre eux le châssis auxiliaire (31) et le second organe (72, 73, 74) pour, lors d'un pivotement du châssis auxiliaire (31) en direction de ladite position de niveau sensiblement transversalement, contraindre ce second organe (72, 73, 74) à se déplacer dans la même direction que le premier organe (75, 76), afin d'obliger ledit second organe (72, 73, 74) à interrompre le fonctionnement des moyens d'actionnement (48, 50, 60), lorsque le châssis auxiliaire (31) atteint cette position.

2. Moissonneuse-batteuse selon la revendication 1, caractérisée en ce que les premier et second organes aptes à coopérer sont constitués par des premier et second organes de contact (75, 76, resp. 72, 73, 74) aptes à opérer pour établir un contact entre eux, afin d'exciter les moyens d'actionnement (48, 50, 60).

3. Moissonneuse-batteuse (10) selon la revendication 2, caractérisée en ce que les moyens d'actionnement (48, 50, 60) comportent:

– un vérin hydraulique (50) reliant entre eux les moyens formant crible (35) et le châssis auxiliaire (31), et

– un système électrohydraulique (60) pourvu d'une électrovanne (62) et reliant entre eux d'une manière fonctionnelle l'inclinomètre (70) et le vérin hydraulique (50); la conception étant telle qu'un passage d'un courant électrique entre lesdits premier et second organes de contact (75, 76, resp. 72, 73, 74), lorsque ceux-ci se touchent, provoque l'actionnement de ladite électrovanne (62) pour commander un écoulement d'un fluide hydraulique en direction et à partir dudit vérin hydraulique (50) en vue d'effectuer une stabilisation dudit châssis auxiliaire (31).

4. Moissonneuse-batteuse (10) selon la revendication 2 ou 3, caractérisée en ce que le second organe de contact (72, 73, 74) possède des premier et second contacts (73, resp. 74); le contact respectif entre le premier organe de contact (75, 76) et lesdits premier et second contacts (73, resp. 74) du second organe de contact (72, 73, 74) provoquant un déplacement du châssis auxiliaire (31) dans des directions opposées.

5. Moissonneuse-batteuse (10) selon l'une quelconque des revendications précédentes, caractérisée en ce que:

– les moyens formant crible (35) possèdent des parois latérales arquées (41) pour correspondre au mouvement de pivotement du châssis auxiliaire (31); et

– le châssis auxiliaire (31) comporte des joints d'étanchéité (43) qui s'étendent longitudinalement et sont aptes à venir en contact avec les parois latérales arquées (41) des moyens formant crible (35) pour éviter la perte de grain battu entre eux.

6. Moissonneuse-batteuse (10) selon l'une quelconque des revendications précédentes, caractérisée en ce que les moyens formant crible (35) sont pourvus de joints d'étanchéité (44) qui s'étendent longitudinalement et sont aptes à venir en contact avec des parois latérales (46) du châssis principal (12) pour empêcher la perte de grain battu entre les moyens formant crible (35) et lesdites parois latérales (46) du châssis principal, pendant le mouvement de va-et-vient des moyens formant crible (35).

7. Moissonneuse-batteuse (10) selon l'une quelconque des revendications précédentes, caractérisée en ce qu'un second moyen formant grille (28) est suspendu au châssis principal (12) au-dessous du premier moyen formant grille (26) prévu sur le châssis auxiliaire (31), en vue de recevoir le grain nettoyé de ce dernier et de le soumettre à une action de nettoyage supplémentaire; les moyens d'entraînement (24, 38) étant accouplés d'une manière fonctionnelle avec ledit second moyen formant grille (28) pour lui permettre un mouvement de va-et-vient sensiblement longitudinal opposé à celui desdits moyens formant crible (35), et la conception étant telle que le mouvement de pivotement du châssis auxiliaire (31) par rapport au châssis principal (12) autour dudit axe (55) qui s'étend longitudinalement, reste sans effet sur le mouvement du second moyen de nettoyage (28).

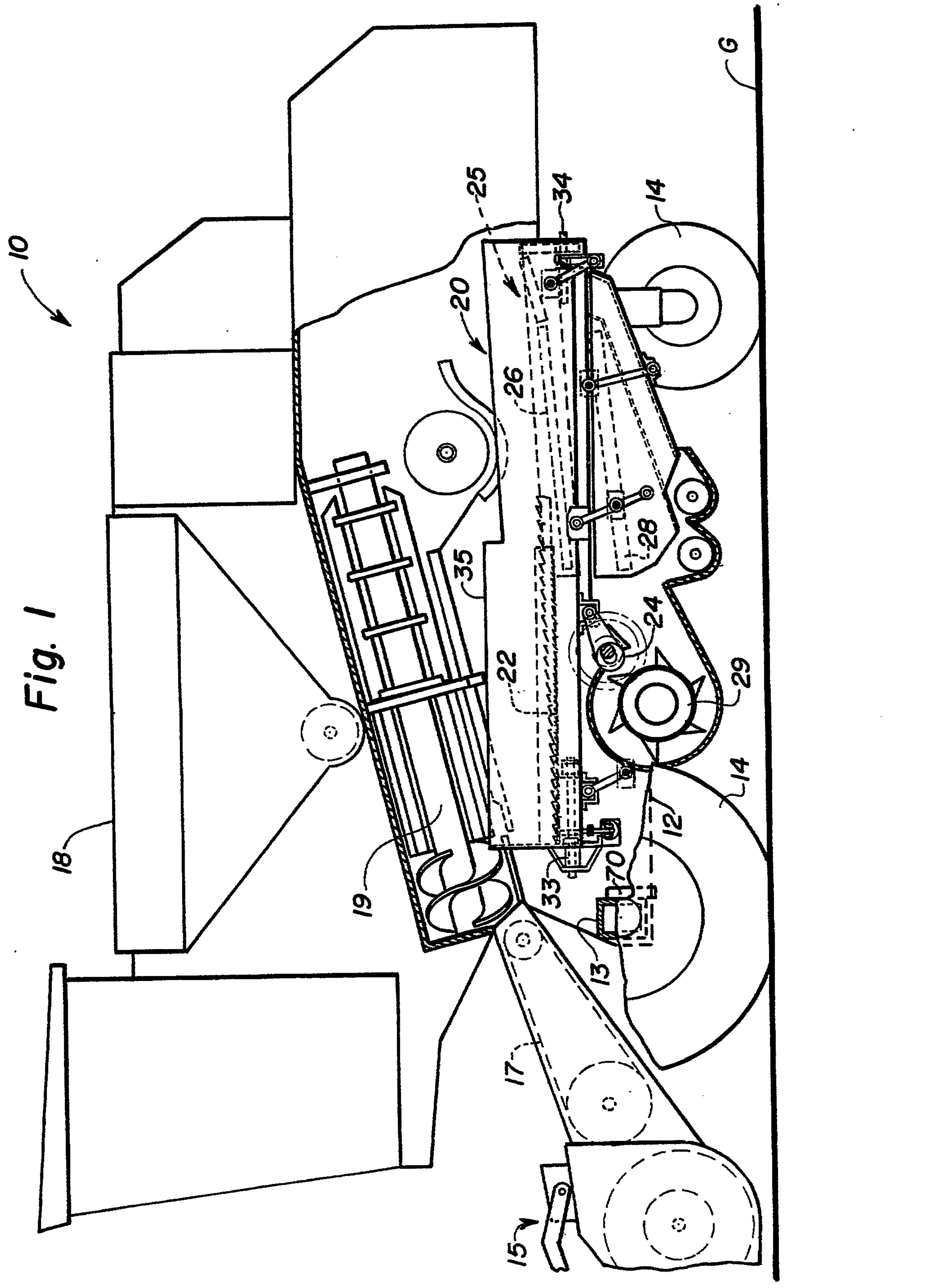


Fig. 1

Fig. 2

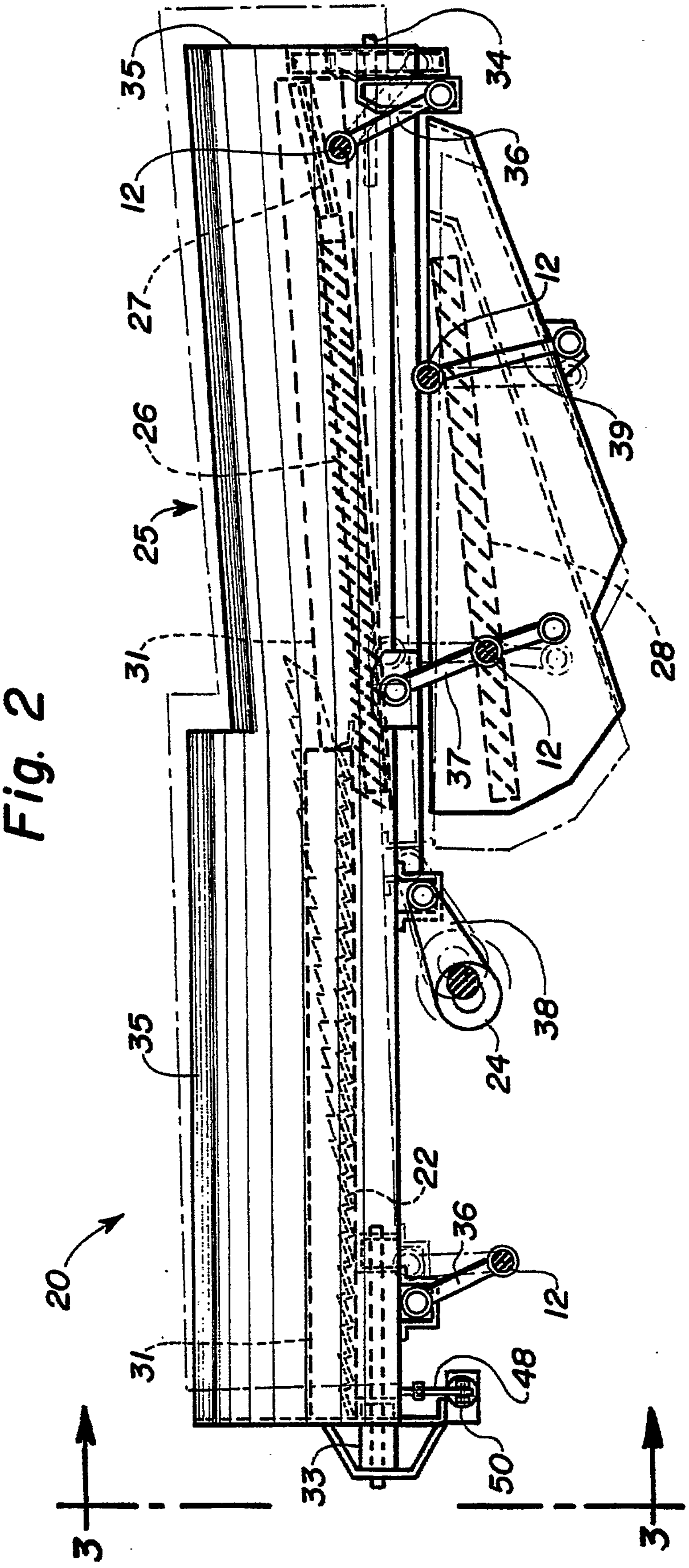
35
34
12
36
27
12
26
39
25
28
31
37
12
38
24
35
22
20
36
12
31
48
33
50
3
3

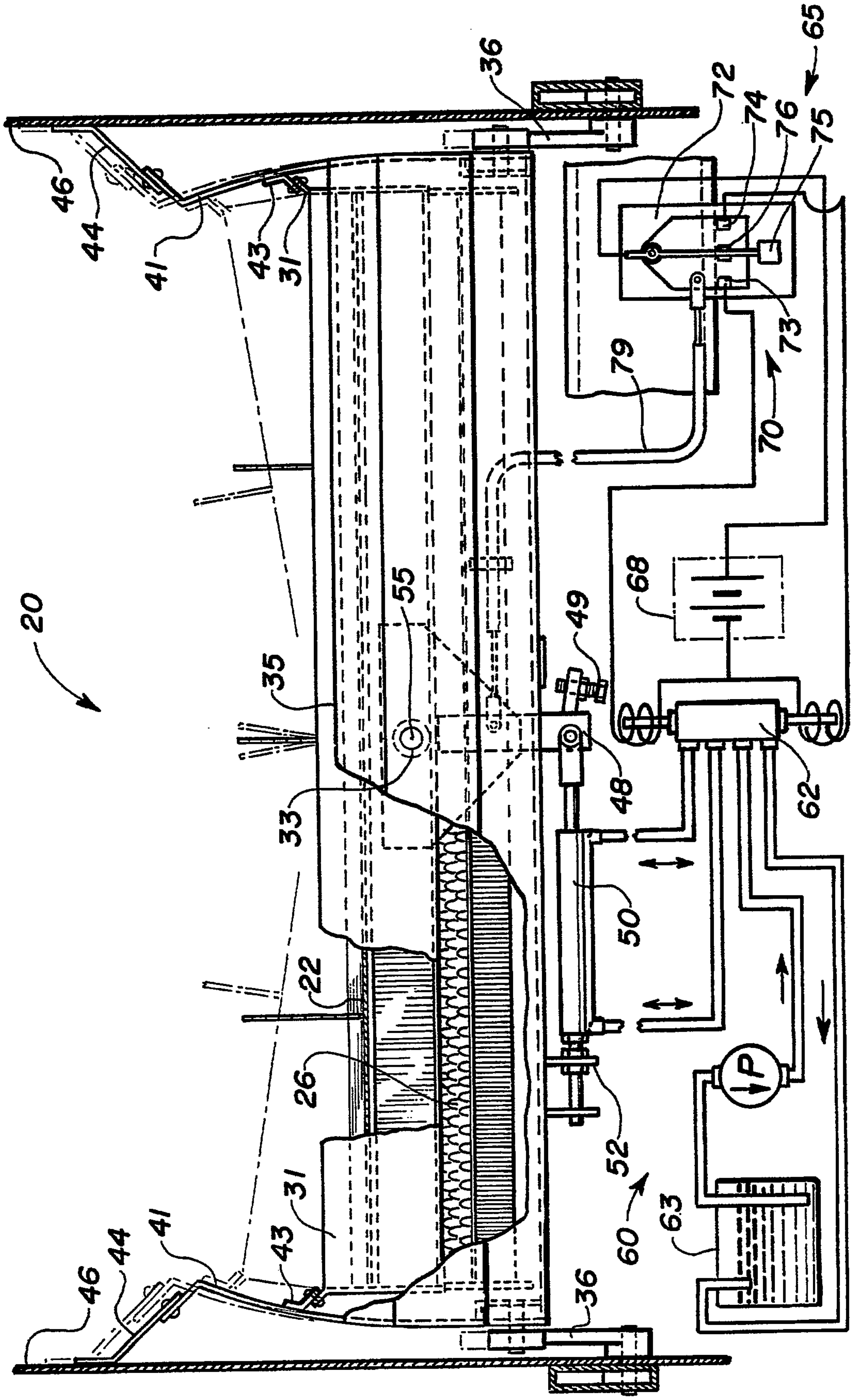
20
22
26
31
33
35
36
41
43
44
46
48
49
50
52
55
60
62
63
65
68
70
72
73
74
75
76
79
P

Fig.3

Fig. 4

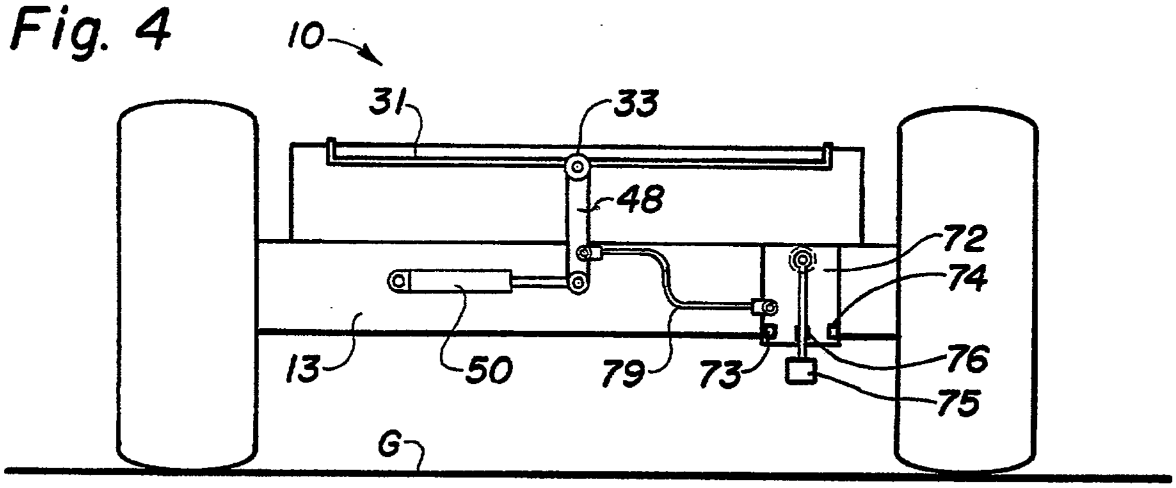


Fig. 5

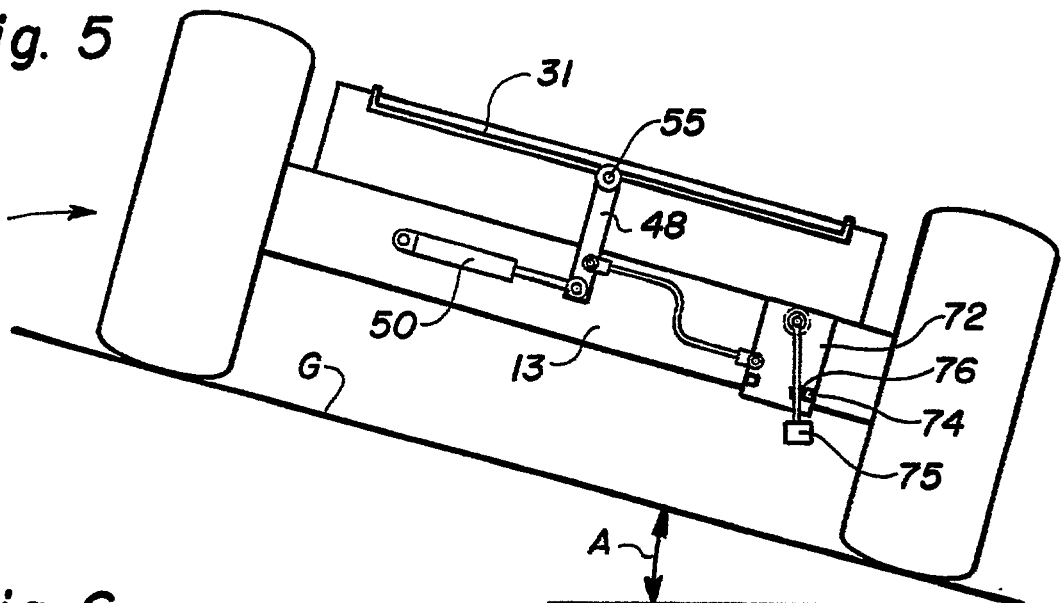


Fig. 6